# EUROPEAN PATENT SPECIFICATION

(11) **EP 0 353 202 B1**
(45) Date of publication and mention of the grant of the patent: **18.09.1996**
(21) Application number: 89830283.1
(22) Date of filing: 20.06.1989
(51) Int. Cl.: H05K 7/18, H02B 1/26

(54) **Modular element system for making electrical panels, in particular of the low voltage type**
Modulares Elementesystem zur Herstellung elektrischer Schalttafeln, insbesondere für niedrige Spannungen
Système d'éléments modulaires pour monter des panneaux électriques, particulièrement du type basse tension

(30) Priority: 27.07.1988 IT 2151988
(43) Date of publication of application: 31.01.1990
(73) Proprietor: Apostolo, Carlo, I-22050 Merate (Como) (IT)
(72) Inventor: Apostolo, Carlo, I-22050 Merate (Como) (IT)
(74) Representative: Cicogna, Franco

(56) References cited:
- EP-A- 0 017 124
- EP-A- 0 054 265
- DE-A- 2 509 487
- DE-B- 1 284 495
- DE-U- 7 915 574
- FR-A- 2 366 721

## Description

### BACKGROUND OF THE INVENTION

The present invention relates to a modular element system for making electrical panels, in particular low-voltage electrical panels.

From EP-A-0 054 265 there is known a switch board frame, the frame comprising a ceiling board and a bottom board having respectively corresponding surfaces, the frame further having a front side surface pillar, a rear side surface pillar and side plates which are connected to the ceiling board, to the bottom board to the front and rear side surface pillars.

As is known, there is presently required to make, in a very quick and simple way, low-voltage electrical panels specifically provided for controlling and protecting several different electrical apparatus including driving and/or power supply components such as electrical motors, servocontrols, controlled power supplies and the like.

Another requirement is that of providing very safe conditions for the operators, mainly in the case of maintenance operations or repairing operations on these low-voltage panels.

Presently, for carrying out maintenance and repairing operations on known electrical panels, these panels should be disenergized: however, since this is not always possible, the operator is compelled to operate in rather unsafe conditions.

Moreover, known electrical panels are presently made by rather low speed methods, starting from base components which have a poor flexibility, since they cannot be fitted to a broad range of requirements.

In addition, there is frequently required the use of highly skilled operators and long assembling and calibrating times, which negatively affects both the operating characteristics and the cost of the finished electrical panel.

### SUMMARY OF THE INVENTION

Thus, the present invention sets out to overcome the above mentioned drawbacks, by providing a system of modular elements which can be made starting from sheet metal materials, insulating and conducting materials, and which affords the possibility of quickly and easily making a broad range of electrical panels, in particular low-voltage electrical panels, by using conventional tools such as screw drivers, wrenches, saws and the like, and in particular by using a very reduced number of component types and codes, without any need of performing adjusting and/or calibrating operations during the panel assembling.

Within the scope of the above mentioned aim, a main object of the present invention is to provide a modular element system, for making low-voltage electrical panels, which affords the possibility of making low-voltage electrical panels able of meeting with a broad range of protecting standards, from normal to tightness standards.

Another object of the present invention is to provide such a modular element system for making electrical panels which can be easily and quickly assembled and the modular elements of which are size standardized, so as to afford the possibility of making at least a type of column, with a metal separation of the supply bus bar system and each component module from the other modules, and allowing for an operator to directly access each single module with the remaining part of the electrical panel under voltage, in a very safe condition, so as to prevent possible contacts with undervoltage or live portions.

Yet another object of the present invention is to provide such a modular element system for making electrical panels which affords the possibility of preassembling modular switch members by using standardized length wires which have been precut and terminated by automatic apparatus and with the possibility of using wire lengths within a broad range.

Yet another object of the present invention is to provide such a modular element system for making electrical panels which affords the possibility of making segregated cells or modules for starting individual electric motors.

Yet another object of the present invention is to provide such a modular element system including power supply, coupling and branching bus-bars which are standardized and related to a specific type of breaker jointly with the related support.

Yet another object of the present invention is to provide such a modular element system which affords the possibility of displacing one or more bus-bar systems from a column to another column, to any desired points along the height of the column, the bus-bars being arranged in a segregated arrangement and with standardized bus-bar supporting members.

Yet another object of the present invention is to provide such a modular element system the modular elements of which can be easily mutually associated by means of fixed abutment members so as to completely suppress the need of carrying out adjusting or calibrating operations during the assembling of said electrical panel.

According to one aspect of the present invention, the above mentioned aim and objects, as well as yet other objects, which will become more apparent hereinafter, are achieved by a modular element system, for making electrical panels, in particular low-voltage electrical panels, said system comprising a column module having a rectangular plate shaped base, a rectangular plate-like coping member a left sidewall, a rear wall and front up-rights, provided for mounting electromecanical operating elements.

### BRIEF DESCRIPTION OF THE DRAWINGS

Further characteristics and advantages of the present invention will become more apparent from the following detailed description of a preferred embodiment thereof, illustrated, by way of an indicative but not limitative example, in the figures of the accompanying drawings, where:
Figure 1 is a perspective view illustrating a column module included in the modular element system according to the invention, and further showing the base structure of the main elements comprising the electrical panel;
Figure 2 is another perspective view illustrating the module of figure 1, and specifically showing the segregated distributing system for the vertical and omnibus bus-bars;
Figure 3 is yet another perspective view illustrating the column module of the preceding figures, and specifically showing: the cross-members for supporting the electrical cables of an adjoining column (not shown), the rear closure panel, the panels including openings for allowing cooling air to pass therethrough, the several doors and raising tools;
Figure 4 is yet another perspective view, partially broken away, illustrating the column module including box-like bodies for supporting box breakers and the segregating shelf from the underlaying cell or module;
Figure 5 is yet another perspective view, partially broken away, of the column module, with elements for supporting modular apparatus and output supply terminal blocks;
Figure 6 is yet another perspective view illustrating that same column module, with the elements for controllably starting electrical motors and with a emovable and interexchangeable plate; and
Figure 7 is a schematic cross-sectional view illustrating the column module and specifically showing the system for naturally circulating cooling air.

### DESCRIPTION OF THE PREFERRED EMBODIMENT

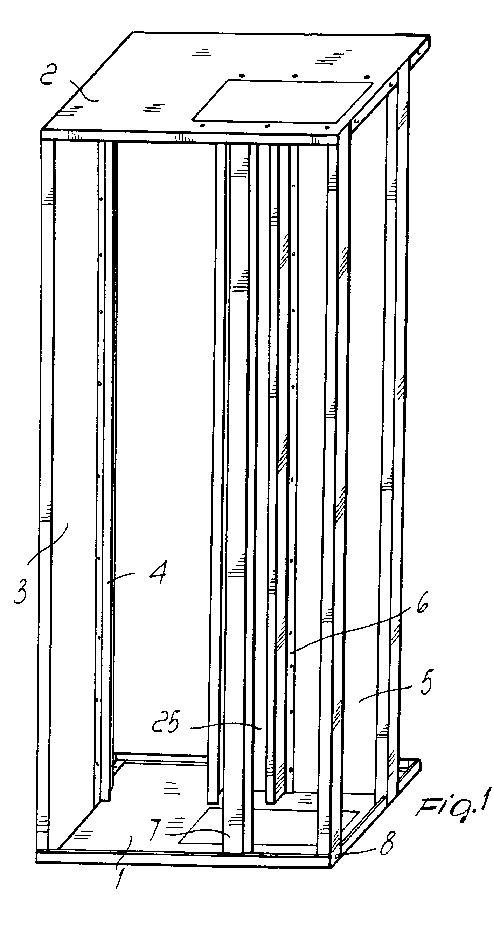

With reference to the figures of the accompanying drawings, the electrical panel according to the invention comprises a standardized base structure column, shown in figure 1, consisting of a base proper and a painted sheet metal coping member, with openings for receiving electrical cables introduced from the top and from the bottom, and with box elements made of a pre-galvanized sheet metal having a single thickness, that is: a box-like body 3 forming the left sidewall with a L-shaped element 4 riveted to the body 3, a box-like body 5 forming the rear wall or panel to which there is riveted the U-shaped element 6, a central upright 7 and a right upright 8.

The elements 3, 5, 6 and 7 are fixed by means of nut members to prewelded bolts which are projection welded on a base and coping members in holes preformed by NC machines, thereby affording a high accuracy.

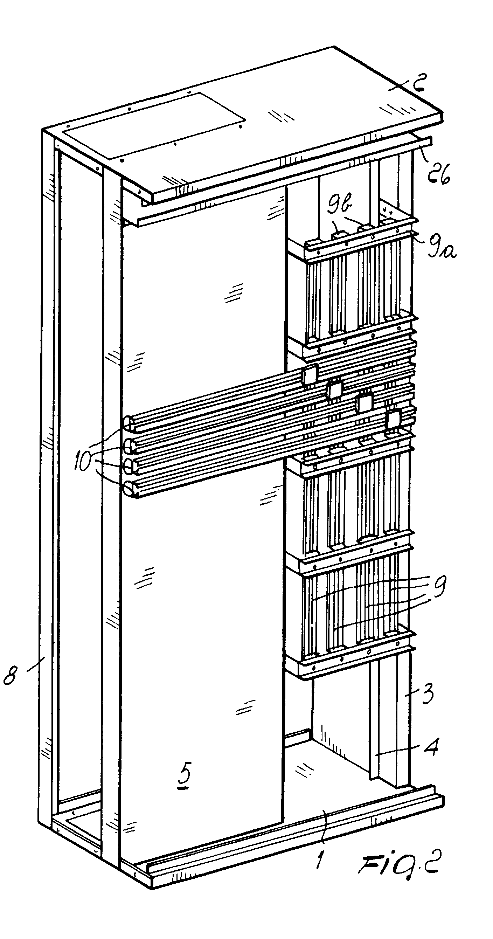

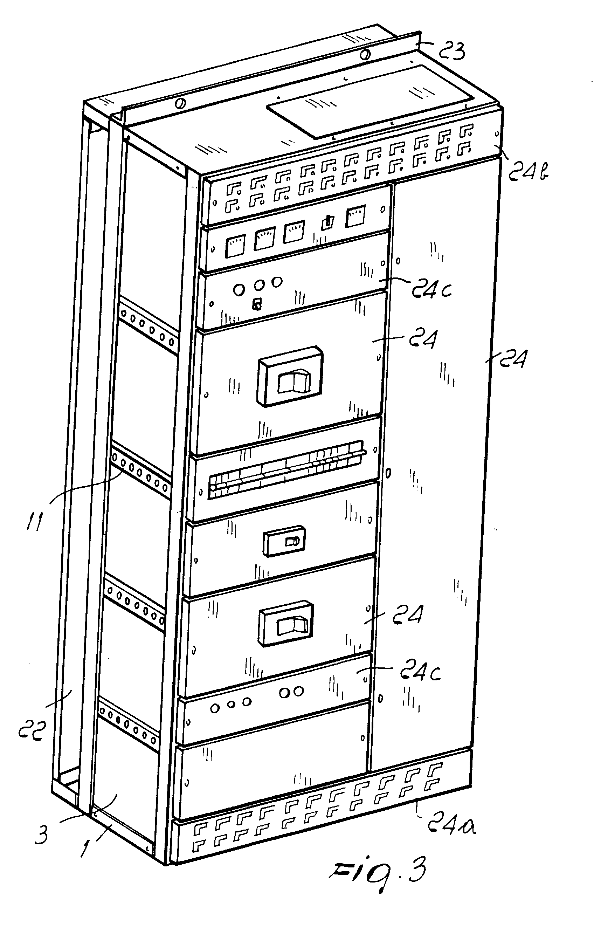

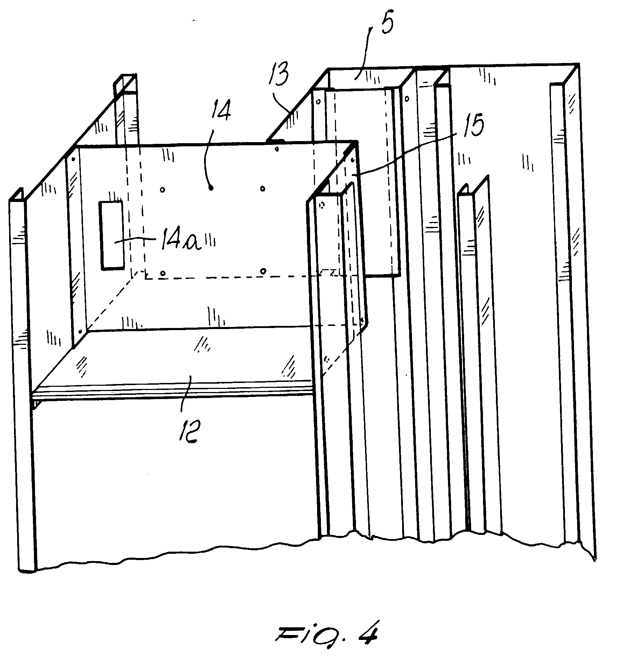

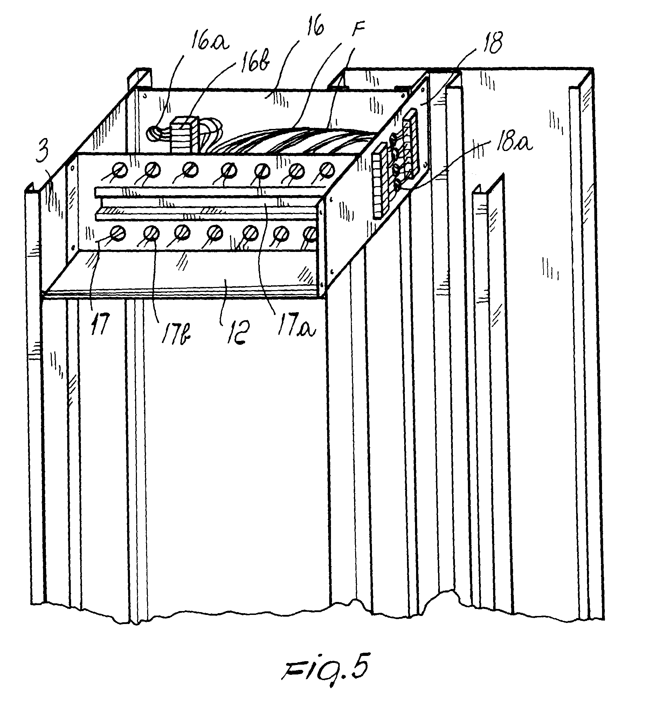

All of the component elements forming the subject electrical panel can be directly mounted on the base structure and these elements specifically comprise: the power supply vertical bus-bar system, with related bus-supports, the system indicated at the reference number 9 in figure 2; the horizontal bus-bar system, indicated at the reference number 10, the supporting cross-members for supporting the electrical cables of the adjoining columns, which cross-members have been indicated at the reference number 11 in figure 3, the vertical channel holding the auxiliary wires providing intercell or inter-module coupling, as shown at the reference number 25 in figure 1, as well as the horizontal channel for receiving the column coupling wires, shown in figure 2 at the reference number 26, and all of the abutment elements for applying shelf members between adjoining modules, indicated in figure 4 at the reference number 12 and for applying the modular elements 13, 14, 15 for mounting box-like breaker members or, as shown in figure 5, for applying the elements 16, 17 and 18 for mounting modular breaker members and, moreover, for applying the modular elements 19, 20 and 21 for the inter-exchangeable plate segregated cell or module for starting electrical motors.

Owing to the provision of the above disclosed base structure, the electrical panel can be assembled in a very easy manner: in fact, for assembling this pannel, all of the above mentioned component elements are mounted on the base structure consisting, as shown in figures 1 and 2, of the base 1, coping member 2, left sidewall 3, rear wall 5 and front uprights 7 and 8.

This assembling is very easy, since the base structure is freely accessible from any sides, which affords the possibility of using the most suitable tools such as riveting machines, pneumatic screwing machines, with a consequent very great reduction of the assembling time.

Also the bus-bar system can be easily completed and provided with means for receiving omnibus bus-bars, as indicated at the reference number 9 in figure 2.

More specifically, the single columns are individually assembled.

These columns, in particular, are assembled in the provided number, for example up to a maximum number of 6, and then there are mounted the omnibus bars and then there are mounted the rear panels as indicated at 22 in figure 3, jointly with the raising members 23 and doors 24 (figure 3).

According to the invention, the omnibus bus-bar system has been specifically designed to provide, with a single type of bus-bars (20 x 10), omnibus bars of 400, 600, 800, 1000 and 1200 mm².

Each box-like element applied to the base structure of substantially panel configuration, with a thickness lower than 50 mm, is made starting from pre-galvanized sheet metal material and supported by the electrical apparatus.

In particular, figure 4 shows panel elements for supporting box-like electrical breakers, provided with front fixtures consisting of: a panel 13 applied to the rear wall 5, for segregating the bus-bar space, a support 14 for a box-like breaker having an opening 14a for receiving power supply cables and bus-bars, a panel 15 for the output of the cables toward the column for receiving the upward cables, and which column is not shown in the broken away view since it is concealed by the central upright.

Figure 5 shows the panel elements for supporting switch members and modular apparatus.

The switches and/or electrical apparatus 3 can also be pre-wired by using standardized length wires F which have been precut and terminated by means of automatic machines.

The subject system provides space for greater lengths.

As specifically shown in figure 5, each supporting box-like body 17 is provided with a support with standardized guide and rail 17a.

The support 17 is provided with a plurality of throughgoing holes 17b, therein there are engaged annular elements, made for example of a resilient material, such as rubber and the like, for protecting the power supply conductor wires F.

According to the invention, the electrical apparatus is supported on supporting bodies 17, through standardized guide-rail members 17a, removably affixed to the support 17 which is in turn affixed to the panel 18 and sidewall 3.

According to a further aspect of the invention, the conductor wires F, coming from the apparatus mounted on the guide 17a, are conveyed to the output terminal blocks 18a and power supply terminal blocks 16b, which terminal blocks are supported by the supporting panel 16, with the wires coming from the bus-bar region, through the hole 16a.

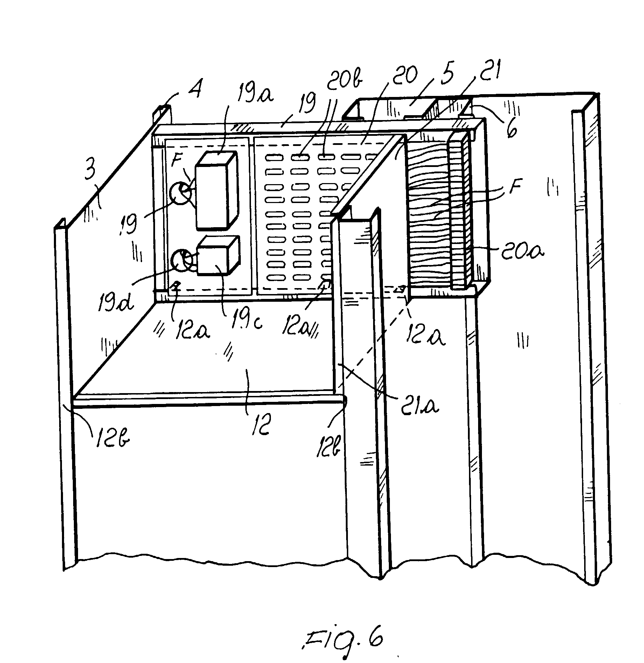

Figure 6 shows panel elements constituting a M.C.C. (Motor Control Center) type of segregated cell, with an interexchangeable plate.

The box-like body 19, coupled to the section member 4 and wall 5 supports the panel 19e with the line input switches or fuses 19a, with the wires F coming from the bus-bar region through the hole 17b, and the auxiliary power supply fuses or terminal blocks 19c, with the wires coming from the vertical channel 25 of figure 1, through the hole 19d.

As shown, the apparatus are supported by the panel 20 which is applied to the completely slotted box-like body 19 (detail 20b) with the wire passing in the inside and with coupling to the terminal block 20a applied to the box-like body 19.

The vertical segregation is performed by the shelf member 12, while the lateral segregation is performed by the panel 21, thereto there is applied a door, by means of hinges riveted to the holes 21a.

Thus, it is possible to easily replace the apparatus supporting panel 20 affixed to the plate 21 and including the door (detail 24c of figure 3).

In particular, the shelf member 12 is engaged in suitable affixing regions of the section members 4 and 6 and in the edge portion of the wall 5, rigidly affixed on the front of the sidewall and upright (detail 12b of figure 6).

As shown in figure 2, the vertical bus-bar system is supported by insulating elements 9b, mounted on metal modular elements 9a and comprises conductive bus-bar elements 9, with the possibility of making branching connections for coupling with box-like apparatus, both by a cable and by a bar at the most suitable point.

According to the invention, it will be possible to make nearly all of the types of electrical panels, in particular low-voltage electrical panels, by substantially using a rectilinear bar type (omnibus bar).

The bars or coupling and branching cables, and the rated values of the box-like breakers will be accordingly standardized, and will pertain to the product code or type related to the switching device type, jointly with the related support, included the branching system.

More specifically, by using the disclosed bus-bar system, it is possible to displays one or more bar systems from a column to another column (see the detail 10 of figure 2) the bar always being segregated, said systems using standardized bars and bar holders arranged in the most functional position, thereby affording the possibility of properly selecting the translation bars all along the height of the column.

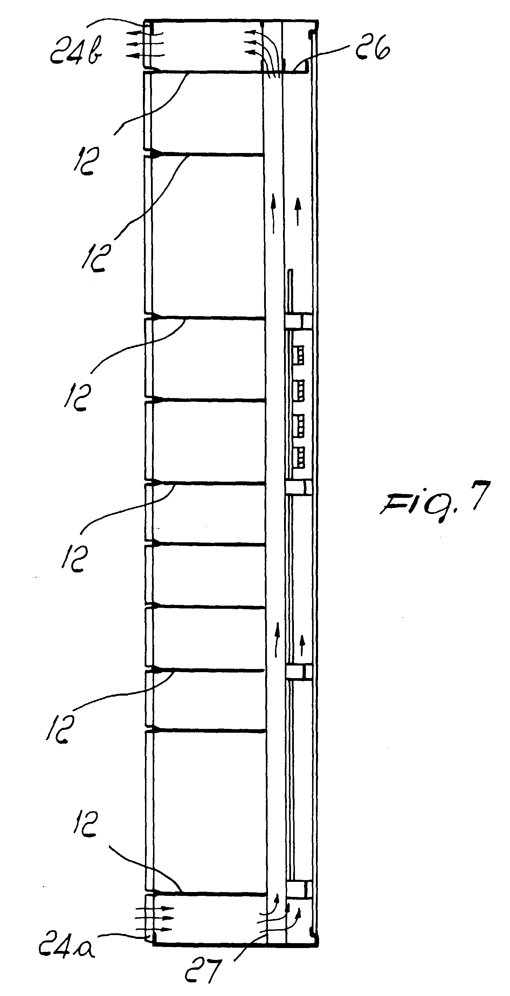

Figure 7 is a cross-sectional view illustrating a natural ventilating system included in the invention.

Ventilating air, through the panels 24a, is directed from the panel 27 into the bus-bar space and exists through the panel 24b.

Under particularly heavy conditions and for electrical panels not supported by a wall, it is possible to increase ventilation by providing bottom and top slots.

Moreover, it should be pointed out that the arrangement of the subject bus-bar structure and all of the pre-galvanized metal sheet supports provides a system which can be grounded at any points thereof.

There are moreover provided ground flexible connections, exclusively for the painted doors, on which electrical apparatus and instruments can be mounted.

The subject electrical panel can be installed on a wall, the vertical bus-bars being easily accessible from the front of the electrical panel.

However, it is preferred to install the subject electrical panel so as to access the bus-bar system for the rear of the panel itself.

The rear walls of the subject electrical panel consist of painted metal sheet elements, similar to the sidewall and front door elements, thereby providing a very good aesthetical apsect.

All of the metal sheet component elements, both black and painted, have been specifically designed for an automatic production.

In particular, there is provided for the use of an automatic panelling machine, effective to provide a high yield and making quality.

This is possible since the thickness dimension is always less than 50 mm.

This provides a further important advantage from the component element packaging standpoint, the volume of the component elements being reduced to a minimum.

For the same reason, the second dimension, that is the width, has been held less than 500 mm.

A slightly modified base structure can be used in power supply panels or boards (Power Centers) with open switches and greater current ratings.

In this case, the base column is introduced into the panel structure, or power center, with the omission of the column for upward detecting electrical cables and with the possibility of accessing the panel from the rear with segregated outputs at the rear.

Likewise, by size modifications, it is possible to make a column which is compatible with the withdrawing drawer M.C.C. boards or panels.

The invention as disclosed is susceptible to several modifications and variations all of which will come within the spirit and scope of the appended claims.

It is to be moreover pointed out that the modular system according to the invention affords the possibility of making electrical panels or boards having the following advantageous characteristics:
a) an outer protection degree according to three arrangements, that is a first arrangement with conventional boards, having a protection IP 30 degree, a second arrangement with powder tight panels, having an IP 41 protection degree and a third arrangement, with tight panels having an IP 54 protection degree;
b) size standardization affording the possibility of using a single column type, with a single base structure;
c) a minimum inner protection degree corresponding to IP 20 with respect to the live parts, with open doors and removed apparatus covering panels;
d) a metally segregated bus-bar system, made by using only one type of bars;
e) the possibility of finishing the bus-bar system and the wiring of a column under the most suitable conditions, since the base structure is accessible from each side, with the possibility of using conventional pneumatic-electrical screwing-riveting devices; in particular, after having finished the columns, these columns are mutually assembled and the panel is finished by applying the bottoms and two sidewalls;
f) preassembling of the modular breaker supports, by using precut and end terminated standardized length wires, the system providing space for greater lengths;
g) elimination of the PVC cover channels as presently used for holding the conductor wires, and which are very expensive both from the cutting to size standpoint and from the constructional standpoint;
h) for an application of modular apparatus there is provided a single type of code which comprises a bottom support with terminal block, an apparatus support including the related DIN guide or rail, a side plate with terminal block supports, a conductor element to be applied to the omnibus bus-bars for coupling the power supply wires to the terminal block, and a door applied to the side plate by hinges;
i) for an application of fixed box-like switching device, there is provided a suitable height shoulder, or panel support, providing an IP 20 protection degree and a segregating side plate, the code related to the apparatus type further including a support plate, related plate members, side shoulder and branching bus-bars or cables with the related fixtures; and a door applied to the side plate by means of hinges;
l) the coupling and branching bus-bars for different rating box-like switching device are standardized and included in the product code related to the switching device type jointly with the related support, included a universal branching system;
m) the displacement in the bus-bar system from a column to another is made always by segregated bus-bars, using standardized bus-bars and bus-bar holders;
n) all of the system has been so designed that the arrangement of the single elements is of the fixed abutment type, without the need of performing any adjustings;
o) for the box-like switching device, the metal segregation is also provided for each single breaker, the metal segregation of the modular apparatus being provided for each row of 24 modules.

In addition, the single drawer, for M.C.C. motor starting purposes,has been made by using a removable apparatus supporting plate which can be removed with the panel under voltage, by simply disengaging the terminal block wires and fuse output wires, said drawer being completely withdrawn from the door thereon there are applied the control and driving apparatus.

In particular, the used materials, even if the best results have been obtained by using two types of metal sheet materials, that is a black 15/10 metal sheet material to be painted and a pre-galvanized 15/10 metal sheet material, as well the size and specific shapes can be any according to requirements.

## Claims

1. A modular element system for making electrical panels, in particular low-voltage electrical panels, said system comprising a column module having a rectangular plate-shaped base (1), a rectangular plate-like coping member (2), a left sidewall (3), a rear wall (5) and front uprights (7, 8) provided for mounting electromechanical operating elements.

2. A modular element system according to Claim 1, characterized in that said column module is made with tolerances of the order of 0,01 mm , obtained by using a numerically controlled machine and supports a plurality of said electromechanical operating elements directly mounted on said column module, said elements comprising one or more of the following component elements: a power supply vertical bus-bar system (9) with related bar holders, at least horizontal bus-bar system (10), a vertical (25) and horizontal (26) channel system for the auxiliary connections, cross members (11) for supporting cables of an adjoining column module, abutment members (12) for applying shelf members (12) and modular supports (13, 14, 15) for all of the provided types of apparatus and switching devices or breakers.

3. A modular element system, according to the preceding claims, characterized in that each fixed box-like breaker, of the withdrawing type, is supported by an individual supporting system comprising a support (14), a supporting shoulder and a segregating side plate and an individual standardized vertical bus-bar branching system.

4. A modular element system, according to one or more of the preceding claims, characterized in that, for the modular apparatus, each supporting system (17) is provided with a plurality of throughgoing holes (17b) for receiving power supply wires (F) of standardized length which have been preliminarily precut and end terminated by means of automatic machines, with side plate including corresponding output terminal blocks (18a).

5. A modular element system, according to one or more of the preceding claims, characterized in that to said throughgoing holes (17b) of said supporting box-like elements there are coupled resilient peripheral annular element to protect the conductor wires (F).

6. A modular element system, according to one or more of the preceding claims, characterized in that in order to carry out a segregate starting by an inter-exchangeable plate motor control center (M.C.C.) cell, each system comprises a bottom panel (20), a slotted removable element (19) and a segregating side plate (21) with a door hinged to the side plate (21).

7. A modular element system, according to one or more of the preceding claims, characterized in that the segregation of the single cells is made by using a single type of shelf member (12) fixedly coupled at the rear and at the front of said electrical panel.

8. A modular element system, according to one or more of the preceding claims, characterized in that it further comprises a natural ventilating system (24a, 27, 24b).

9. A modular element system, according to one or more of the preceding claims, characterized in that it further comprises a metally segregated omnibus bus-bar system so designed and arranged as to provide, by a single type of bar, at least five types of omnibus conductors.

10. A modular element system, according to one or more of the preceding claims, characterized in that said bus-bars comprise a rectilinear bar module for omnibus bars and bar modules of substantially L or C shape for coupling to each box-like breaker.

11. A modular element system, according to one or more of the preceding claims, characterized in that said column module is accessible from any sides thereof.

## Patentansprüche

1. Ein modulares Elementesystem zur Herstellung elektrischer Schalttafeln, insbesondere von Niederspannungs-Schalttafeln, wobei dieses System einen Säulenmodul mit einer rechtwinkligen, plattenförmigen Basis (1), einem rechtwinkligen, plattenähnlichen Abdeckbauteil (2), einer linken Seitenwand (3), einer Rückwand (5) und Vorderstützen (7, 8) umfaßt, der zum Befestigen elektromechanischer Betriebselemente dient.

2. Ein modulares Elementesystem nach Anspruch 1, dadurch gekennzeichnet, daß dieser Säulenmodul mit einer Toleranz in der Größenordnung von 0,01 mm hergestellt wird, was durch Verwendung einer digital gesteuerten Maschine erreicht wird, und daß er eine Vielzahl dieser elektromechanischen Bestandteile trägt, die direkt an diesem Säulenmodul befestigt werden, wobei diese Elemente eines oder mehrere der folgenden Bestandteile umfassen: ein vertikales Stromversorgungsschienensystem (9) mit entsprechenden Schienenhaltern, zumindest ein horizontales Stromschienensystem (10), ein vertikales (25) und horizontales (26) Kanalsystem für die Hilfsverbindungen, Querglieder (11) zum Halten von Kabeln eines angrenzenden Säulenmoduls, Stützglieder (12) zum Anbringen von Einsatzbauteilen (12) und modulare Sockel (13, 14, 15) für alle vorgesehenen Gerätetypen und Schaltvorrichtungen oder Unterbrecher.

3. Ein modulares Elementesystem nach den vorhergehenden Ansprüchen, dadurch gekennzeichnet, daß jeder der befestigten, kastenähnlichen entfernbaren Unterbrecher durch ein gesondertes Sockelsystem gehalten wird, das einen Sockel (14), einen Stützabsatz und eine abtrennende Seitenplatte sowie ein gesondertes, standardisiertes vertikales Stromschienenverzweigungssystem umfaßt.

4. Ein modulares Elementesystem nach einem oder mehreren der vorhergehenden Ansprüche, dadurch gekennzeichnet, daß für die modularen Geräte jedes der Tragesysteme (17) mit einer Vielzahl durchgehender Löcher (17b) zur Aufnahme der Stromversorgungsdrähte (F) von standardisierter Länge, die zuvor mit Hilfe von automatischen Maschinen zugeschnitten und terminiert wurden, ausgerüstet ist, wobei die Seitenplatte entsprechende Ausgangsanschlußblöcke (18a) einschließt.

5. Ein modulares Elementesystem nach einem oder mehreren der vorhergehenden Ansprüche, dadurch gekennzeichnet, daß mit jedem dieser durchgehenden Löcher (17b) dieser haltenden kastenähnlichen Elemente elastische, entlang dem Umfang verlaufende ringförmige Elemente verbunden sind, die die Leitungsdrähte (F) schützen.

6. Ein modulares Elementesystem nach einem oder mehreren der vorhergehenden Ansprüche, dadurch gekennzeichnet, daß zur Ausführung eines getrennten Starts durch eine Zelle eines Motorregelungszentrums (MCC) auf einer austauschbaren Platte jedes System eine Bodenplatte (20), ein mit Schlitzen versehenes herausnehmbares Element (19) und eine abtrennende Seitenplatte (21) mit einer Tür umfaßt, die in dieser Seitenplatte (21) eingehängt ist.

7. Ein modulares Elementesystem nach einem oder mehreren der vorhergehenden Ansprüche, dadurch gekennzeichnet, daß die Trennung der einzelnen Zellen durch die Verwendung von Einsatzbauteilen (12) eines einzigen Typs bewirkt wird, die unbeweglich mit der Rückseite und der Vorderseite dieser elektrischen Schalttafel verbunden sind.

8. Ein modulares Elementesystem nach einem oder mehreren der vorhergehenden Ansprüche, dadurch gekennzeichnet, daß es ferner ein natürliches Lüftungssystem (24a, 27, 24b) umfaßt.

9. Ein modulares Elementesystem nach einem oder mehreren der vorhergehenden Ansprüche, dadurch gekennzeichnet, daß es ferner ein metallisch getrenntes Sammelschienenssystem umfaßt, das so entworfen und angeordnet ist, daß es mit Schienen eines einzigen Typs mindestens fünf Typen von Sammelleitern bereitstellt.

10. Ein modulares Elementesystem nach einem oder mehreren der vorhergehenden Ansprüche, dadurch gekennzeichnet, daß diese Stromschienen einen geradlinigen Schienenmodul für Sammelschienen und im wesentlichen L- oder C-förmige Schienenmodule zur Verbindung mit jedem kastenähnlichen Unterbrecher umfassen.

11. Ein modulares Elementesystem nach einem oder mehreren der vorhergehenden Ansprüche, dadurch gekennzeichnet, daß dieser Säulenmodul von allen seinen Seiten her zugänglich ist.

## Revendications

1. Un système d'éléments modulaires pour réaliser des panneaux électriques, notamment des panneaux électriques basse tension, ledit système comprenant un module en forme de colonne avec un socle (1) ayant la forme d'une planche rectangulaire, un élément de dessus (2) ayant la forme d'une planche rectangulaire, une paroi latérale gauche (3), une paroi arrière (5) et des montants frontaux (7, 8), mis en oeuvre pour la fixation de composantes opérationnelles électromécaniques.

2. Un système d'éléments modulaires selon la revendication 1, caractérisé en ce que ledit module en forme de colonne est réalisé avec des tolérances dans l'ordre de 0,01 mm obtenues en utilisant une machine sous commande numérique, et qu'il supporte une multiplicité desdites composantes opérationnelles électromécaniques directement montées sur ledit module en forme de colonne, lesdites composantes comprenant une ou plusieurs des composantes suivantes: un système d'alimentation à barres collectrices (9) vertical avec de correspondants porte-barres, au moins un système d'alimentation à barres collectrices (10) horizontal, des systèmes de canaux vertical (25) et horizontal (26) pour les connexions auxiliaires, des traverses (11) pour supporter les câbles d'un module en forme de colonne voisin, des appuis (12) pour l'application de rayons (12) et des supports modulaires (13, 14, 15) pour tous les types de dispositif ou de commutateur ou disjoncteur mis en oeuvre.

3. Un système d'éléments modulaires selon les revendications précédentes, caractérisé en ce que chaque disjoncteur en boîte fixé, du type enfichable, est supporté par un système d'appui individuel comportant un appui (14), une épaule d'appui et une planche séparatrice latérale de même qu'un système de ramification à barres collectrices individuel vertical standardisé.

4. Un système d'éléments modulaires selon l'une ou plusieurs des revendications précédentes, caractérisé en ce que pour le dispositif modulaire chaque système d'appui (17) est doté d'une multiplicité de trous de passage (17b) pour loger des câbles d'alimentation en courant (F) de longueurs standardisées, qui ont été préalablement précoupés et terminés à l'aide de machines automatiques, la planche latérale incluant de correspondants blocs de connexion de sortie (18a).

5. Un système d'éléments modulaires selon l'une ou plusieurs des revendications précédentes, caractérisé en ce que des éléments annulaires résilients périphériques sont reliés auxdits trous de pasage (17b) desdits éléments de support en forme de boîte, afin de protéger les conducteurs (F).

6. Un système d'éléments modulaires selon l'une ou plusieurs des revendications précédentes, caractérisé en ce que, pour effectuer un démarrage à part d'une cellule à planche interchangeable du centre de commande du moteur, chaque système comprend une planche inférieure (20), un élément à fentes amovible (19) et une planche séparatrice latérale (21), une porte étant pivotée sur la planche latérale (21).

7. Un système d'éléments modulaires selon l'une ou plusieurs des revendications précédentes, caractérisé en ce que la séparation des cellules individuelles est réalisée en utilisant un seul type de rayon (12) fermement relié à l'arrière et au devant dudit panneau électrique.

8. Un système d'éléments modulaires selon l'une ou plusieurs des revendications précédentes, caractérisé en ce qu'il comprend en outre un système de ventilation naturelle (24a, 27, 24b).

9. Un système d'éléments modulaires selon l'une ou plusieurs des revendications précédentes, caractérisé en ce qu'il comprend en outre un système métallique de barres omnibus séparé, qui est conçu et arrangé de manière à fournir, avec un seul type de barre, au moins cinq types de conducteurs omnibus.

10. Un système d'éléments modulaires selon l'une ou plusieurs des revendications précédentes, caractérisé en ce que lesdites barres collectrices comprennent un module en forme de barre rectiligne pour barres omnibus, et des modules en forme de barre substantiellement en L ou en C pour la connexion avec chaque disjoncteur en boîte.

11. Un système d'éléments modulaires selon l'une ou plusieurs des revendications précédentes, caractérisé en ce que ledit module en forme de colonne est accessible à partir de n'importe quel de ses côtés.
